# EUROPÄISCHE PATENTANMELDUNG

(11) **EP 4 166 053 A1**
(43) Veröffentlichungstag der Anmeldung: **19.04.2023**
(21) Anmeldenummer: 22196353.1
(22) Anmeldetag: 19.09.2022
(51) Int. Cl.: A47J 37/12

(54) **FRITTEUSE FÜR DIE GROSSKÜCHE**

(30) Priorität: 13.10.2021 DE 102021126512
(71) Anmelder: MKN Maschinenfabrik Kurt Neubauer GmbH & Co. KG, 38300 Wolfenbüttel (DE)
(72) Erfinder: SCHARNOFSKE, Hartmut, 38300 Wolfenbüttel (DE); HELM, Peter, 38300 Wolfenbüttel (DE); KLEIBER, Christian, 38300 Wolfenbüttel (DE)
(74) Vertreter: Berghofer, Benedikt

(57) **Zusammenfassung**

Die vorliegende Erfindung betrifft eine Fritteuse (1) für die Großküche mit einem Gehäuse, in dem eine wannenartige Gareinrichtung (5) zur Aufnahme eines Frittiermediums ausgebildet ist, einer aus mindestens einem Heizelement (9) gebildeten Heizeinrichtung (7), welche in die wannenartige Gareinrichtung (5) in eine Betriebsstellung einschwenkbar und aus dieser herausschwenkbar ist, wobei die Heizeinrichtung (7) an einer drehbaren Schwenkeinrichtung (11) angebracht ist, die in einer Lagereinrichtung (13) gelagert ist, wobei die Lagereinrichtung (13) einen an dem Gehäuse der Fritteuse (1) bzw. an einer Oberseite (3) des Gehäuses der Fritteuse (1) befestigten ersten Lagerblock (15) umfasst, der eine Gewichtskompensationseinrichtung (24) aufweist, die dazu eingerichtet ist, ein vorbestimmtes Gewichtskompensationsmoment als Gegendrehmoment auf die Schwenkeinrichtung (11) in Abhängigkeit der Schwenkstellung der Heizeinrichtung (7) auszuüben, das einem durch die Heizeinrichtung (7) erzeugten Drehmoment entgegenwirkt, wobei das Gegendrehmoment derart ausgelegt ist, dass ab einem vorbestimmten Schwenkwinkel ausgehend von der Betriebsstellung der Heizeinrichtung (7) ein selbständiges Zurückschwenken der Heizeinrichtung (7) in die Betriebsstellung verhindert ist.

## Beschreibung

Die vorliegende Erfindung betrifft eine Fritteuse für die Großküche. Derartige Fritteusen weisen ein Gehäuse auf, in dem eine wannenartige nach oben offene Gareinrichtung zur Aufnahme eines Frittiermediums, auch als Frittierbecken bezeichnet, ausgebildet ist. Zum Erhitzen des Frittiermediums für das Frittieren von Nahrungsmitteln, wie beispielsweise Pommes frites, ist eine Heizeinrichtung vorgesehen, die mindestens ein Heizelement aufweist.

Fritteusen für den professionellen Einsatz in der Großküche gibt es mit innenliegenden oder außenliegenden Heizelementen. Außenliegend bedeutet dabei, dass die Heizelemente hinter der Wand der wannenartigen Gareinrichtung angeordnet sind und somit nicht direkt mit dem Öl in Kontakt kommen. Verwendung finden dabei Elektro- oder Gasheizkörper. Beim Reinigen der Gareinrichtung müssen die Heizelemente nicht beachtet werden, weil die Gareinrichtung frei ist. Nachteilig bei außenliegenden Heizelementen ist jedoch die indirekte und damit verlustbehaftete Heizung, was der Tendenz der Energieeinsparung zuwiderläuft. Aufgrund der oftmals nur kleinen beheizten Oberflächen der Wandung des Frittierbeckens ergeben sich hohe flächenspezifische Heizleistungen, die das Frittieröl thermisch stark belasten, was einen häufigeren Öltausch erfordert.

Um diese Nachteile zu überwinden, kommen als Heizeinrichtung weit verbreitet innenliegende Widerstandsheizkörper, beispielsweise Rohrheizkörper, als Heizelemente zum Einsatz, die eine sehr effektive Beheizung ermöglichen, weil Widerstandsheizkörper einen sehr hohen Wirkungsgrad von nahezu 100% haben und die Energie direkt an das Frittiermedium übertragen wird. Aus dem Stand der Technik ist bekannt, die Heizeinrichtung aus einer Betriebsstellung, in der die Heizeinrichtung in das Frittierbecken eingeschwenkt ist, herauszuschwenken, woraufhin das Frittierbecken nach Ablass des Frittiermediums vollständig gereinigt werden kann. Hierzu ist die Heizeinrichtung an einer drehbaren Schwenkeinrichtung angebracht, die in einer Lagereinrichtung gelagert ist.

Nachteilig bei innenliegenden Heizelementen des Standes der Technik ist die Gefahr, dass die herausgeschwenkten Heizelemente versehentlich Zurückschwenken können, wodurch die Gefahr besteht, dass das heiße Frittiermedium verspritzt wird, was unter anderem zu Verbrennungen bei sich in der Nähe befindenden Personen führen kann. Beim Stand der Technik ist ein Sicherungsbügel vorgesehen, der die Heizeinrichtung in der herausgeschwenkten Position fixiert. Dieser Sicherungsbügel soll durch Schwerkraft in seine Sicherungsstellung fallen, was jedoch, je nach Wartung, Alter und/oder Verschmutzungsgrad der Fritteuse nicht immer gewährleistet sein kann.

Als Alternative zu einem Sicherungsbügel kommt ein Federstift zum Einsatz, der die Schwenkeinrichtung in einer vorbestimmten Lage durch Eindringen in eine entsprechende Öffnung der Schwenkeinrichtung fixiert. Mit der Zeit kann durch Verschmutzung oder Fehlbenutzung eine sichere Fixierlage des Federstifts nicht mehr gewährleistet werden, weil sich beispielsweise der Federstift verbiegt oder abrundet, oder die Öffnung sich zusetzt, sodass ein sicherer Eingriff nicht mehr gegeben ist, wodurch die sichere Arretierungsposition der Heizeinrichtung nicht mehr gewährleistet ist.

Darüber hinaus ist bei den Ausführungsformen des Standes der Technik nachteilig, dass eine Zweihandbedienung zumindest beim Absenken der Heizeinrichtung notwendig ist. Mit einer Hand muss der Sicherungsbügel oder der Federstift gelöst werden und mit der zweiten Hand dabei die gegebenenfalls schwere Heizeinrichtung gehalten werden, um ein Hineinfallen in das Frittiermedium zu vermeiden. Im hektischen Küchenbetrieb und bei heißem Frittiermedium im Frittierbecken ist diese Zweihandbedienung deshalb nachteilig. Dies ist besonders bei kleinen Bedienpersonen nachteilig, weil diese eine nicht unerhebliche Kraft mit gestrecktem Arm aufbringen müssen.

Aufgabe der vorliegenden Erfindung ist es deshalb, eine Fritteuse vorzuschlagen, die die oben beschriebenen Nachteile des Standes der Technik vermeidet und die einen sicheren und zuverlässigen Schwenkmechanismus der Heizeinrichtung mit einer Einhandbedienung verwirklicht.

Diese Aufgabe wird durch die Merkmale des Patentanspruchs 1 gelöst.

Erfindungsgemäß umfasst die Lagereinrichtung einen an dem Gehäuse der Fritteuse befestigten ersten Lagerblock, der eine Gewichtskompensationseinrichtung aufweist, die dazu eingerichtet ist, ein vorbestimmtes Gewichtskompensationsmoment als Gegendrehmoment auf die Schwenkeinrichtung in Abhängigkeit der Schwenkstellung der Heizeinrichtung auszuüben, das einem durch die Heizeinrichtung erzeugten Drehmoment entgegenwirkt, wobei das Gegendrehmoment derart ausgelegt ist, dass ab einem vorbestimmten Schwenkwinkel ausgehend von der Betriebsstellung der Heizeinrichtung ein selbständiges Zurückschwenken der Heizeinrichtung in die Betriebsstellung verhindert ist.

Mit der vorliegenden Erfindung werden eine ganze Reihe von Vorteilen verwirklicht. Erstens wird ein ungewolltes Zurückfallen der Heizeinrichtung in das heiße Frittieröl vermieden. Zweitens kann durch die Gewichtskompensation ein leichtes Schwenken der Heizeinrichtung mit geringer Kraft erreicht werden. Drittens ist es möglich, das Aus- und Einschwenken mittels einhändiger Bedienung vorzunehmen, was insbesondere kleinen Personen die Handhabung erleichtert, und viertens ist bis zu dem vorbestimmten Schwenkwinkel ein selbstständiges Zurückschwenken der Heizeinrichtung sichergestellt. Dies ist insbesondere vorteilhaft bei einem unbeabsichtigten geringen Herausschwenken der sich im Betrieb befindlichen Heizeinrichtung, wodurch verhindert wird, dass durch die große Heizleistung der Heizeinrichtung geringe an der Heizeinrichtung anhaftende Frittierölmengen so weit erhitzt werden, dass sie Feuer fangen. Somit ist ein ungestörter Betrieb sichergestellt.

Mittels der Schwenkeinrichtung ist die Heizeinrichtung um eine Schwenkachse schwenkbar in der Lagereinrichtung gelagert. Die Gewichtskraft der Heizeinrichtung bewirkt dabei ein Drehmoment um die Schwenkachse. Bis zu einer Stellung, in der der Schwerpunkt der Heizeinrichtung über die Schwenkachse hinwegbewegt wird, zieht die Gewichtskraft bzw. das durch diese bewirkte Drehmoment die Heizeinrichtung zurück in die Betriebsstellung. Die Gewichtskompensationseinrichtung erzeugt nun das Gegendrehmoment um die Schwenkachse, das dem Drehmoment der Heizeinrichtung entgegenwirkt. Dieses Gegendrehmoment kann derart ausgelegt werden, dass es in einem Bereich des Schwenkwinkels mit dem Drehmoment der Heizeinrichtung im Wesentlichen im Gleichgewicht steht und bei einem größeren Schwenkwinkel ausgehend von der Betriebsstellung größer als das Drehmoment der Heizeinrichtung ist und dadurch das selbständige Zurückschwenken der Heizeinrichtung in die Betriebsstellung verhindert.

Vorteilhafterweise beträgt der vorbestimmte Schwenkwinkel zwischen 15° und 45°, bevorzugt zwischen 20° und 30°. Ab diesem Schwenkwinkel ist eine Rückbewegung der Heizeinrichtung in ihre Betriebsstellung verhindert, wobei vorteilhafterweise dieser Winkel einstellbar ist. Hierbei können Größe der Heizeinrichtung, Dimension der Heizeinrichtung, Füllhöhe des Frittierbeckens und/oder Leistung der Heizeinrichtung sowie die Reibung der sich bewegenden Elemente Berücksichtigung finden.

Das Gegendrehmoment ist derart ausgelegt ist, dass ab dem vorbestimmten Schwenkwinkel ausgehend von der Betriebsstellung der Heizeinrichtung ein selbständiges Zurückschwenken der Heizeinrichtung in die Betriebsstellung verhindert ist. Mit anderen Worten kann die Gewichtskompensationseinrichtung derart ausgelegt bzw. eingestellt sein, dass ab dem vorbestimmten Schwenkwinkel ausgehend von der Betriebsstellung der Heizeinrichtung ein selbständiges Zurückschwenken der Heizeinrichtung in die Betriebsstellung verhindert ist.

Die Gewichtskompensationseinrichtung weist vorzugsweise eine Gegenkrafteinrichtung auf, die über eine Verbindungsstange an einem exzentrisch mit einer Scheibe verbundenen drehbaren Hebel angreift, welche ihrerseits mit der Schwenkeinrichtung verbunden ist und durch Drehung der Schwenkeinrichtung in Drehung versetzt wird. Damit wird eine sehr robuste und wirksame Einrichtung geschaffen, die vorteilhafterweise nur wenige Teile benötigt, um die oben genannten Vorteile zu verwirklichen.

Die Scheibe ist vorzugsweise um die Schwenkachse drehbar gelagert. Durch die exzentrisch mit der Scheibe verbundenen Hebel erzeugt die Gegenkrafteinrichtung daher das Gegendrehmoment um die Schwenkachse. Der Hebel kann separat oder integral mit der Verbindungsstange ausgebildet sein. Alternativ kann die Verbindungsstange selbst, also auch ohne Hebel, drehbar und exzentrisch mit der Scheibe verbunden sein.

In einer bevorzugten Ausführungsform ist die Gegenkrafteinrichtung in Form einer Federeinrichtung ausgebildet. Die Federeinrichtung ist in einem bevorzugten Ausführungsbeispiel eine Druckfeder, die einen Druck nach unten ausübt und damit die Verbindungsstange ebenfalls nach unten drückt. Hierbei ergibt sich der deutliche Vorteil, dass bei Bruch der Druckfeder, diese nur um eine Windung zusammenbricht, der Federdruck ansonsten aber aufrechterhalten bleibt, insbesondere wenn die Federwindungen eng zusammenliegen und die Feder mit der Verbindungsstange geführt ist.

Die Federeinrichtung kann aber auch als Zugfeder ausgebildet sein. Alternative Ausführungsformen der Gegenkrafteinrichtung sind ebenfalls denkbar, beispielsweise in Form von hydraulischen oder pneumatischen Einrichtungen. Auch kann bei besonders schweren Heizeinrichtungen gegebenenfalls ein Hubmotor zum Einsatz kommen.

Weiterhin ist vorteilhaft, dass die Verbindungsstange in Form einer Schraube bzw. Gewindestange ausgebildet ist, die sich durch die Federeinrichtung erstreckt und mit einer Halteplatte, gegen die die Federeinrichtung drückt, zusammenwirkt. Dadurch wird die Federkraft der Federeinrichtung auf die Verbindungsstange übertragen und erzeugt somit die notwendige Gegenkraft, die zusammen mit dem Hebel das Gegendrehmoment erzeugt.

Die Halteplatte kann auf die als Schraube ausgebildete Verbindungsstange aufgeschraubt sein. Durch Verdrehen der Halteplatte entlang der Verbindungsstange kann der Federweg und somit die von der Federeinrichtung erzeugte Gegenkraft eingestellt werden.

Mit Vorteil erstreckt sich die als Schraube ausgebildete Verbindungsstange über die Halteplatte hinaus und ist nach der Einstellung der Gegenkraft in ihrer Lage gegen Verdrehen gesichert. Dies kann auf vielfältige Weise erfolgen, beispielsweise durch Kontermuttern, Verklebungen etc. Die Gegenkraft kann auf besonders einfache Weise durch Drehen der Schraube entsprechend eingestellt werden. Vorteilhaft ist weiterhin, dass die Schraube so lang ausgebildet ist, dass bei der Montage der Federeinrichtung sich diese im entspannten Zustand befindet.

Alternativ zu einer Schraube kann als Verbindungsstange auch eine einfache Stange, die auf einfache Weise mit der Federeinrichtung verbunden ist, beispielsweise mittels einer Halteplatte und einer Nut in der Verbindungsstange, in der ein Sprengring den Halteplatte an die Verbindungsstange sichert. Anstelle kann ein Stift in einem Querloch der Verbindungsstange vorgesehen sein. Zwar ist eine Einstellbarkeit der Federeinrichtung dadurch nicht mehr gegeben, dafür können aber mögliche Fehleinstellungen vermieden werden.

Um zu verhindern, dass ein Überschwenken der Heizeinrichtung mit der Folge des Nach-hinten-Kippens erfolgt, weist der erste Lagerblock eine Seitenwand mit wenigstens einer ersten Anschlageinrichtung auf, und weist die Scheibe, an der die Verbindungsstange über den Hebel angreift, eine zweite Anschlageinrichtung auf, die in der maximalen Ausschwenkstellung der Schwenkeinrichtung gegen die erste Anschlageinrichtung des ersten Lagerblocks anschlägt.

Grundsätzlich ist bei Fritteusen eine Notabschaltung der Heizleistung gefordert, wenn sich die Heizeinrichtung nicht mehr in dem Frittiermedium bzw. im Frittierbecken befindet. Die Fritteuse umfasst daher bevorzugt eine Schalteinrichtung für die Heizeinrichtung, die derart von der Gewichtskompensationseinrichtung betätigbar ist, dass zumindest ab dem vorbestimmten Schwenkwinkel, ab dem ein selbstständiges Zurückschwenken der Heizeinrichtung in die Betriebsstellung verhindert wird, die Heizeinrichtung abgeschaltet wird.

In einer bevorzugten Ausführungsform ist die Schalteinrichtung für die Heizeinrichtung eine mechanische Schalteinrichtung, mit einem Betätigungselement, das sich von der Schwenkeinrichtung durch eine Aussparung der drehbaren Scheibe erstreckt und bei Drehung der Scheibe von einem ersten Schaltzustand, in dem die Heizeinrichtung angeschaltet ist, in einen zweiten Schaltzustand, in dem die Heizeinrichtung abgeschaltet ist, bzw. bei umgekehrter Drehung umgekehrt, versetzbar ist. Damit wird in Abhängigkeit von der Drehung der Schwenkeinrichtung und damit der Position der Heizeinrichtung ein sicheres Abschalten im notwendigen Bereich beim Schwenken der Heizeinrichtung gewährleistet. Beispielsweise ist das Betätigungselement derart angeordnet, dass es beim Drehen der Scheibe von der Verbindungsstange betätigt bzw. entlastet wird.

In einer bevorzugten Ausführungsform weist der erste Lagerblock der Gewichtskompensationseinrichtung eine Bodenplatte auf, in der eine Öffnung ausgebildet ist, in der eine Lagereinrichtung der Federeinrichtung mit einer Öffnung für die Verbindungsstange ausgebildet ist, wobei die Federeinrichtung gegen ihre Lagereinrichtung anschlägt. Bevorzugt ist die Lagereinrichtung der Federeinrichtung in der Art eines sich selbst zentrierenden Gelenks ausgeführt. Die Verbindungsstange erstreckt dabei durch ein Langloch der Lagereinrichtung der Federeinrichtung, um die Lageänderung der Verbindungsstange beim Schwenken mit dem zum Langloch versetzten Drehpunkt zu ermöglichen.

Weiterhin ist vorteilhaft, dass die Scheibe auf einer Wellenbuchse angeordnet ist, die mit der Schwenkeinrichtung verbunden ist und die Schwenkeinrichtung bei ihrer Drehung die Wellenbuchse in Drehung versetzt und damit die Scheibe dreht. Damit wird auf einfache Weise die Drehlagerung der Schwenkeinrichtung und die von der Drehung abhängige Gewichtskompensation erreicht.

Weiterhin ist vorteilhaft, dass ein zweiter Lagerblock der Lagereinrichtung an der dem ersten Lagerblock entgegengesetzten Seite der Schwenkeinrichtung vorgesehen ist, durch den sich die für die Heizeinrichtung vorgesehenen Anschlussleitungen erstrecken. Damit wird auf einfache und platzsparende Weise einerseits die Gewichtskompensationseinrichtung auf der einen Seite der Schwenkeinrichtung verwirklicht und die gesamte insbesondere elektrische Versorgung der Heizeinrichtung kann über den zweiten Lagerblock auf der anderen Seite der Schwenkeinrichtung erfolgen.

Mit großem Vorteil ist die Federeinrichtung als Druckfeder ausgebildet ist, die bevorzugt als Schraubenfeder mit einer geringen Steigung ausgebildet ist. Dadurch wird ein Versagen der Gewichtskompensationseinrichtung im Wesentlichen verhindert, weil bei einem Federbruch nur mit dem Bruch einer Windung der Schraubenfeder zu rechnen ist und dadurch sich die Federkraft nur geringfügig ändert. Ein unbeabsichtigtes Zurückfallen der Heizeinrichtung in das Frittierbecken ist damit verhindert und der Schwenkmechanismus ist eigensicher.

Weitere Einzelheiten, Merkmale und Vorteile der vorliegenden Erfindung ergeben sich aus der nachfolgenden beispielhaften Beschreibung eines bevorzugten Ausführungsbeispiels der vorliegenden Erfindung unter Bezugnahme auf die beigefügten Zeichnungen. Darin zeigt:
- Fig. 1: eine schematische perspektivische Teilansicht einer erfindungsgemäßen Fritteuse mit einer Heizeinrichtung in Betriebsstellung und einer Gewichtskompensationseinrichtung;
- Fig. 2: eine Ansicht ähnlich zu jener von Fig. 1, in der jedoch die Heizeinrichtung um ca. 30° aus ihrer Betriebsstellung nach oben geschwenkt ist;
- Fig. 3: eine Ansicht ähnlich zu jener der Figuren 1 und 2, in der jedoch die Heizeinrichtung in ihre maximale Ausschwenkstellung verschwenkt ist;
- Fig. 4: eine schematische perspektivische Seitenansicht der Gewichtskompensationseinrichtung in der Position der Betriebsstellung der Heizeinrichtung; und
- Fig. 5: eine perspektivische Seitenansicht ähnlich zu jener von Fig. 4, jedoch in der Position der maximalen Ausschwenkstellung der Heizeinrichtung.

In den Figuren sind gleiche Elemente mit den gleichen Bezugsziffern bezeichnet.

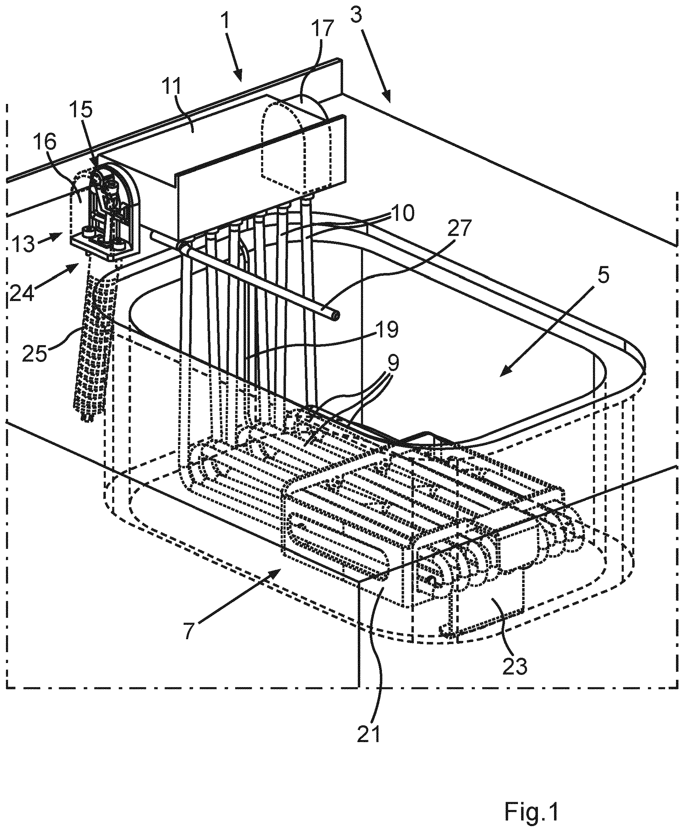

Es wird zunächst Bezug genommen auf Fig. 1, in der in perspektivischer Ansicht eine erfindungsgemäße Fritteuse 1 dargestellt ist. Die Fritteuse 1 weist ein Gehäuse mit einer Oberseite 3 auf. In dem Gehäuse der Fritteuse 1 ist eine nach oben offene, wannenartige Gareinrichtung 5, auch als Frittierbecken bezeichnet, ausgebildet. In dem Frittierbecken 5 befindet sich eine Heizeinrichtung 7, die eine Mehrzahl von rohrförmigen Heizelementen 9 aufweist, die in an sich bekannter Weise über Verbindungsrohre 10 mit einer Schwenkeinrichtung 11 verbunden sind. Die Heizelemente 9 können beispielsweise als bevorzugt rohrförmige Widerstandsheizkörper ausgebildet sein, die über die Verbindungsrohre 10 mit Strom versorgt werden.

Die Heizeinrichtung 7 befindet sich in ihrer Betriebsstellung, in der sie vollständig in das Frittierbecken 5 eingeschwenkt ist. Die Heizelemente 9 können in einem Halterahmen 21 gelagert sein, der ein Abstützblech 23 aufweist, das die Heizelemente 9 am Boden des Frittierbeckens 5 abstützt. Ein Temperaturfühler 19 ist vorgesehen, der zur Erfassung der Temperatur des Frittieröls im Frittierbecken 5 dient.

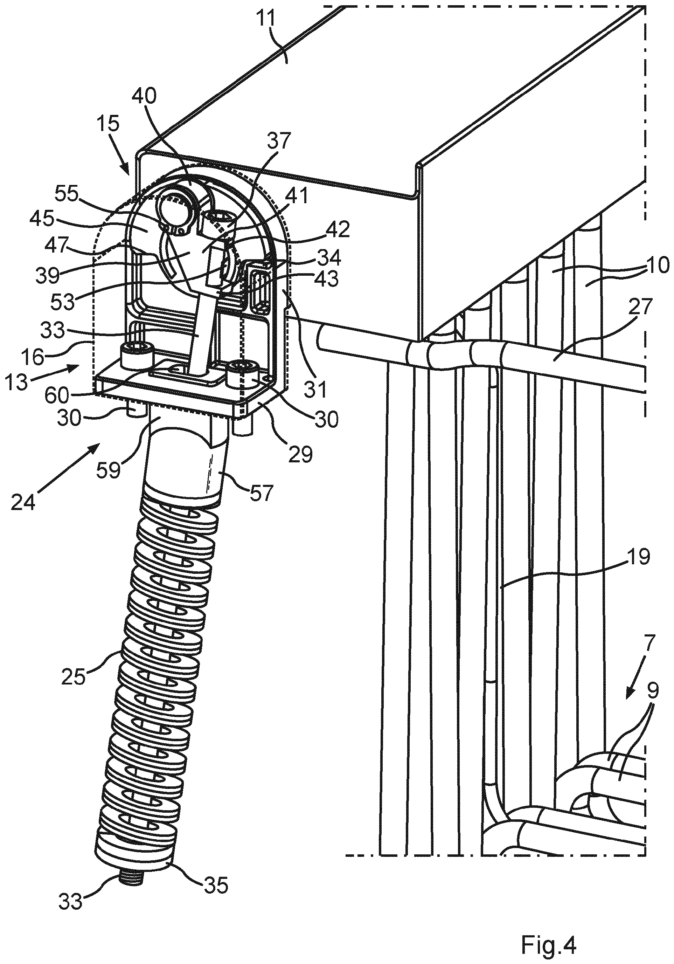

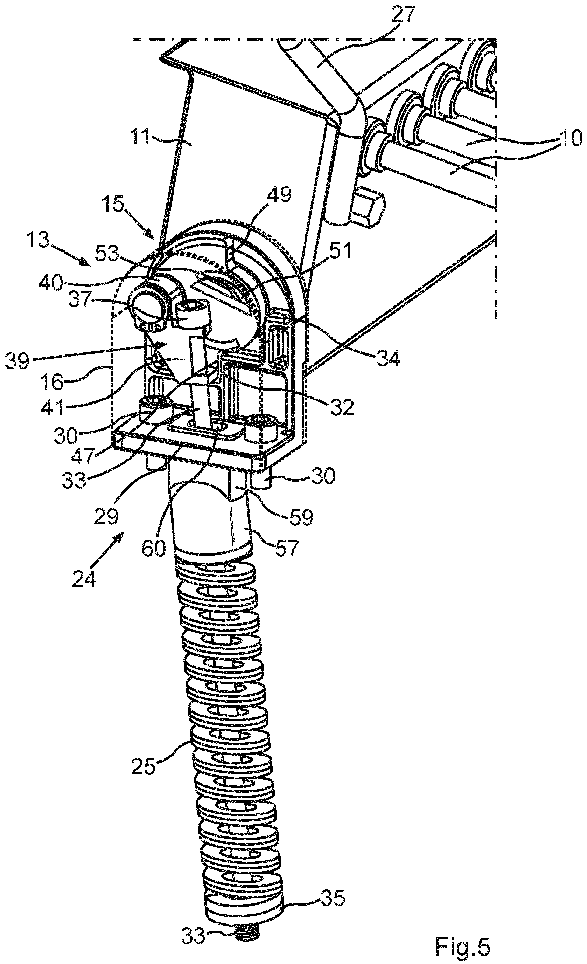

Die Schwenkeinrichtung 11 ist auf ihrer linken Seite in Fig. 1 in einem ersten Lagerblock 15 einer Lagereinrichtung 13 und auf ihrer rechten Seite in Fig. 1 in einem zweiten Lagerblock 17 gelagert. Beide Lagerblöcke 15 und 17 sind von einer Kappe 16 abgedeckt, wobei in und an dem ersten Lagerblock 15 eine Gewichtskompensationseinrichtung 24 angeordnet ist, die weiter unten unter Bezugnahme auf die Figuren 4 und 5 beschrieben werden wird.

Wie aus Fig. 1 ersichtlich, umfasst die Gewichtskompensationseinrichtung 24 eine Federeinrichtung 25, die unterhalb des ersten Lagerblocks 15 angeordnet und an diesem gelagert ist.

Zur Erzeugung einer Drehbewegung der Schwenkeinrichtung 11 und damit der Heizeinrichtung 7 auf manuelle Weise ist an der Schwenkeinrichtung 11 eine Betätigungsstange 27 angeordnet. Diese erstreckt sich von der Schwenkeinrichtung 11 seitlich entlang des Frittierbeckens 5.

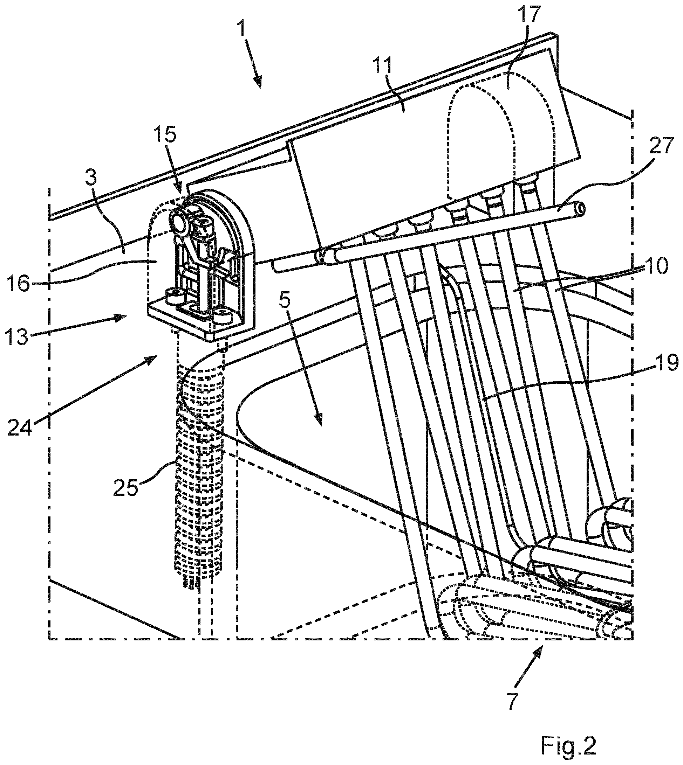

Fig. 2 zeigt die Fritteuse 1 von Fig. 1 in einer geänderten Position der Heizeinrichtung 7, nämlich in einer Position, in der die Heizeinrichtung 7 aus ihrer Betriebsstellung um ca. 30° nach oben geschwenkt ist.

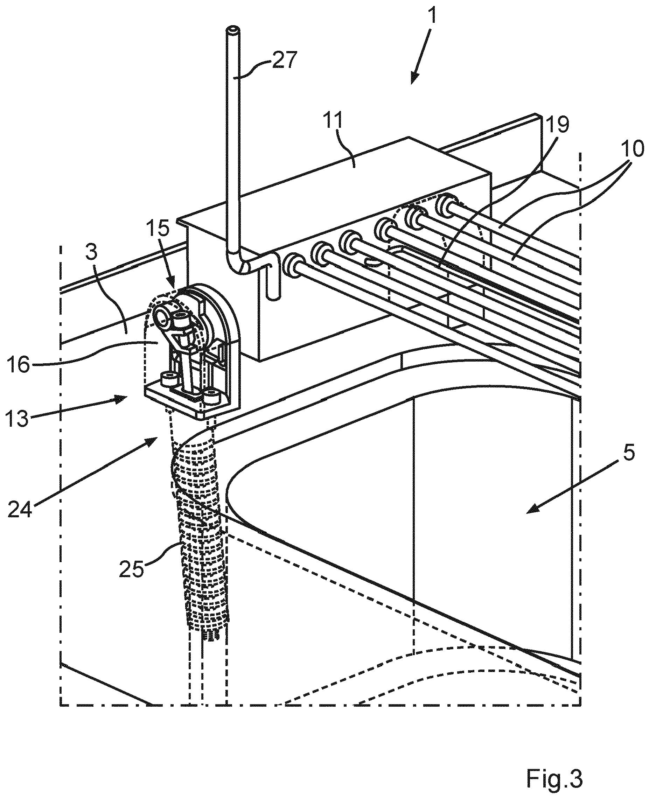

Zur weiteren Verdeutlichung der Schwenkbewegung der Heizeinrichtung 7 zeigt die Fig. 3 die maximale Ausschwenkposition der Heizeinrichtung 7, die im dargestellten Ausführungsbeispiel einer Position um ca. 90° nach oben gegenüber der Betriebsstellung entspricht.

Es wird nunmehr Bezug genommen auf die Figuren 4 und 5 mithilfe derer die Gewichtskompensationseinrichtung 24 detailliert erläutert wird und anhand derer die erfindungsgemäße Lehre noch deutlicher wird.

Der erste Lagerblock 15 weist eine Bodenplatte 29 auf, die mittels Schrauben 30 mit der Gehäuseoberseite 3 des Gehäuses der Fritteuse 1 verschraubt und damit lagefixiert sein kann. Gegenüber der linken Stirnwand der Schwenkeinrichtung 11 befindet sich eine Seitenwand 31 des ersten Lagerblocks 15 in der über eine Buchse (nicht dargestellt) die Schwenkeinrichtung 11 um eine Schwenkachse drehbar gelagert ist. Mit der Buchse dreht sich auch eine Scheibe 45, an der exzentrisch ein Hebel 39 mittels eines Kopfes oder Drehkopfes 40 drehbar angelenkt ist. Dadurch ist der Hebel 39 um eine Achse drehbar mit der Scheibe 45 verbunden, wobei die Achse beabstandet zur Schwenkachse der Schwenkeinrichtung 11 angeordnet ist. Der Hebel 39 kann eine Lagergabel 41 aufweisen, mit zwei Schenkeln, einem oberen Schenkel 42 und einem unteren Schenkel 43. Sowohl der obere Schenkel 42 als auch der untere Schenkel 43 weisen eine Öffnung zur Aufnahme einer Verbindungsstange 33 auf, die sich von dem Hebel 39 nach unten in die Federeinrichtung 25 erstreckt. Dabei erstreckt sich die Verbindungsstange 33 im dargestellten Ausführungsbeispiel über die Federeinrichtung 25 hinaus und ist mit einer Halteplatte 35 verbunden, die das untere Lager der Federeinrichtung 25 darstellt.

Die Verbindungsstange 33 ist als Schraube mit einem Schraubenkopf 37 ausgebildet, wobei sich das Gewinde der Schraube bis unterhalb der Halteplatte 35 erstreckt und die Halteplatte 35 mit einer geeigneten Befestigungseinrichtung, wie beispielsweise einer Mutter, durch die Verbindungsstange 33 fixiert ist. Die Federeinrichtung 25 ist hier als eine Druckfeder ausgebildet, die die Verbindungsstange 33 nach unten drückt. Vorzugsweise kann die Federkraft der Federeinrichtung 25 durch Drehen der als Schraube ausgebildeten Verbindungsstange 33, der Halteplatte 35 oder einer die Halteplatte 35 sichernden Mutter eingestellt werden.

Alternativ kann anstelle einer Schraube eine Stange eingesetzt werden, mit einer Befestigungsmöglichkeit für die Federeinrichtung.

Wie aus den Figuren 4 und 5 ersichtlich, erstreckt sich die Verbindungsstange 33 durch eine Öffnung in der Bodenplatte 29, in der eine Lagereinrichtung 59 für die Federeinrichtung 25 angeordnet ist. Die Lagereinrichtung 59 weist ein Langloch60 auf, durch das sich die Verbindungsstange 33 erstreckt und das eine Bewegung der Verbindungstange 33 mit der Scheibe 45 erlaubt. Ein oberes Lagerelement 57 bildet einen Anschlag für die Federeinrichtung 25, sodass die Federeinrichtung 25 zwischen dem Halteelement 35 und dem Lagerelement 57 aufgenommen ist. Das Lagerelement 57 weist eine Durchgangsöffnung auf, durch die sich die Verbindungsstange 33 hindurch erstreckt. Die Lagereinrichtung 59 und das obere Lagerelement 57 der Federeinrichtung 25 bilden ein Gelenk, wobei hierzu die Lagereinrichtung 59 eine konkave Unterseite und das obere Lagerelement 57 eine konvexe Oberseite aufweisen kann, die miteinander eingreifen. Die konkave Unterseite und die konvexe Oberseite sind derart geformt, dass die Lagereinrichtung 59 und das Lagerelement 57 um eine Lagerachse schwenkbar miteinander verbunden sind, die vorzugweise parallel zur Schwenkachse der Schwenkeinrichtung verläuft. Durch die Federkraft drückt das Lagerelement 57 gegen die Lagereinrichtung 59 und zentriert sich selbst.

Alternativ kann die Lagerung der Federeinrichtung auch als Ein-Achsen Gelenkelement wie ein Scharnier ausgebildet sein.

Nachfolgend wird die Funktionsweise der erfindungsgemäßen Gewichtskompensationseinrichtung 24 beschrieben. In Fig. 4 befindet sich die Heizeinrichtung 7 in Betriebsstellung, d. h. die Heizeinrichtung 7 ist mit ihren Heizelementen 9 in das Frittierbecken 5 abgesenkt. Der Kopf 40 des Hebels 39 befindet sich in seiner obersten Stellung, im Wesentlichen in einer "12:00 Uhr"-Stellung. Hier wirkt die größte Federkraft der Federeinrichtung 25, wobei jedoch der geringste Hebel und damit das geringste durch die Feder aufgebrachte Gegendrehmoment wirkt (sin 0° = 0). Der Hebel des Gegendrehmoments ist definiert als der Abstand zwischen der Achse, um die der Hebel 39 drehbar an der Scheibe 45 angebracht ist, und der Schwenkachse der Schwenkeinrichtung 11 in einer Richtung senkrecht zur Richtung der Federkraft.

Wird sodann mittels der Betätigungsstange 27 die Schwenkeinrichtung 11 nach oben geschwenkt und dadurch die Heizeinrichtung 7 aus dem Frittieröl im Frittierbecken 5 herausgeschwenkt, vergrößert sich die Hebelwirkung des Hebels 39 und damit das Gegendrehmoment, wobei ab einem vorbestimmten Schwenkwinkel sich ein Momentengleichgewicht zwischen dem Drehmoment durch das Gewicht der Heizeinrichtung 7 und dem Gegendrehmoment durch die Federkraft der Federeinrichtung 25 einstellt. Theoretisch ist unterhalb des vorbestimmten Schwenkwinkels das von der Heizeinrichtung 7 erzeugte Drehmoment größer als das Gegendrehmoment, während oberhalb des vorbestimmten Schwenkwinkels das Gegendrehmoment größer als das von der Heizeinrichtung 7 erzeugte Drehmoment ist. Vor allem aufgrund von Reibung in der Lagereinrichtung 13 der Schwenkeinrichtung 11 sowie der Lagerung des Hebels 39 an der Scheibe 45 reichen geringe Änderungen des Schwenkwinkels ausgehend vom vorbestimmten Schwenkwinkel jedoch nicht dazu aus, dass das jeweils größere Drehmoment das kleinere Drehmoment und die Reibungskräfte überwindet. Dadurch ergibt sich in der Praxis ein Winkelbereich um den vorbestimmten Schwenkwinkel, in dem die Heizeinrichtung 7 im Gleichgeweicht gehalten wird und sich nicht absenkt bzw. nicht angehoben wird. Erfindungsgemäß lässt sich der vorbestimmte Schwenkwinkel voreinstellen und ist veränderbar, beispielsweise über die Einstellung der Federkraft der Federeinrichtung, wie oben beschrieben.

In Fig. 5 befindet sich der Kopf 40 des Hebels 39 in der "9:00 Uhr"-Stellung, was der größten Hebelwirkung entspricht (sin 90° = 1). In dieser Stellung befindet sich die Heizeinrichtung 7 in ihrer maximalen Ausschwenkstellung. Um ein weiteres Umklappen der Heizeinrichtung 7 zusammen mit der Schwenkeinrichtung 11 über die maximale Ausschwenkstellung, quasi ein Nach-hinten-Umklappen, zu verhindern, ist in der Seitenwand 31 des ersten Lagerblocks 15 eine erste Anschlageinrichtung 32 in Form eines rippenartigen Vorsprungs der Seitenwand 31 ausgebildet. Dieser wirkt als Anschlag gegen eine zweite Anschlageinrichtung 47 der Scheibe, die einen nockenartigen Vorsprung darstellt. Die Anschlagstellung ist in Fig. 5 deutlich sichtbar.

In der Stellung gemäß Fig. 5 wirkt weiterhin ein Gegendrehmoment auf die Schwenkeinrichtung 11, das größer ist als das Gewichtsmoment der Heizeinrichtung 7, sodass die Heizeinrichtung 7 in ihrer hochgeschwenkten Stellung verbleibt.

In Fig. 5 ist eine Aussparung 51 in der Scheibe 45 ersichtlich, durch die sich ein Betätigungselement 53 einer mechanischen Schalteinrichtung erstreckt, die sich in der Schwenkeinrichtung 11 befindet und dazu dient, beim Ausschwenken der Heizeinrichtung 7 die Heizleistung zu unterbrechen. In der in Fig. 4 gezeigten Position befindet sich das Betätigungselement 53 in einem ersten Schaltzustand, in dem die Heizeinrichtung 7 mit Energie versorgt wird, wobei vorzugsweise die Bewegung des federbelasteten Betätigungselements 53 in den ersten Schaltzustand entgegen der Federkraft des Betätigungselements 53 durch die Verbindungsstange 33 erfolgt. Die Fig. 5 zeigt demgegenüber einen unterbrochenen zweiten Schaltzustand der Schalteinrichtung, in dem die Heizeinrichtung 7 ausgeschaltet ist, vorzugsweise durch Entlasten des federbelasteten Betätigungselements 53, das nicht mit in Kontakt mit der Verbindungsstange 33 steht.

Wie aus dem Vergleich der Figuren 4 und 5 ersichtlich, bewegt sich, da sich die Verbindungsstange 33 in dem Langloch der Lagereinrichtung 59 der Federeinrichtung 25 bewegt, auch die daran befestigte Federeinrichtung 25 und schwenkt ebenfalls hin und her.

Die Endposition der Heizeinrichtung 7 in ihrer Betriebsstellung wird durch das Abstützblech 23 (Fig. 1) definiert. Zur weiteren Sicherheit, dass sich beispielsweise bei fehlendem Abstützblech 23 oder anderen Umstände ein Aufschlagen der Heizelemente 9 am Boden des Frittierbeckens 5 ergeben könnte, ist eine dritte Anschlageinrichtung 34 in Form eines rippenartigen Vorsprungs an der Seitenwand 31 des ersten Lagerblocks 15 ausgebildet, die mit einer vierten Anschlageinrichtung 49 der Scheibe 45 zusammenwirken würde. In der Fig. 4 ist die Betriebsstellung der Heizeinrichtung 7 dargestellt. Der als vierte Anschlageinrichtung 49 vorspringende Abschnitt der Scheibe 45 befindet sich leicht oberhalb der vierten Anschlageinrichtung 49 der Seitenwand 45 und berührt diese nicht. Dies dient insbesondere auch zur Vermeidung einer Doppelpassung.

Vorteilhafterweise kann der gesamte Schwenkmechanismus einschließlich Heizeinrichtung im vormontierten Zustand auf je eine Öffnung in der Oberseite des Gehäuses 3 der Fritteuse 1 im Bereich des jeweiligen Lagerblocks 15, 17 aufgesetzt werden und jeder Lagerblock durch an der Öffnung vorbereitet Gewindeeinsätze durch die Schrauben 30 verschraubt werden. Die ermöglicht eine besonders einfache Montage und verhindert weitere Eingriffe in das Gehäuse 3 der Fritteuse.

Mit der vorliegenden Erfindung wird somit ein Schwenkmechanismus für die Heizeinrichtung einer Großküchen-Fritteuse geschaffen, der sicher, zuverlässig, robust und extrem leicht handhabbar ist, und mit dem die Gefahr des Verspritzens von heißem Frittiermedium vermieden werden kann.

### Bezugszeichenliste:

1 - Fritteuse
3 - Oberseite des Gehäuses der Fritteuse
5 - wannenartige Gareinrichtung/Frittierbecken
7 - Heizeinrichtung
9 - Heizelement
10 - Anschlussrohr
11 - Schwenkeinrichtung
13 - Lagereinrichtung
15 - erster Lagerblock
16 - Abdeckkappe
17 - zweiter Lagerblock
19 - Temperaturfühler
21 - Halterahmen
23 - Abstützblech
24 - Gewichtskompensationseinrichtung
25 - Federeinrichtung
27 - Betätigungsstange
29 - Bodenplatte
30 - Befestigungsschrauben
31 - Seitenwand
32 - erste Anschlageinrichtung (des ersten Lagerblocks)
33 - Verbindungsstange
34 - dritte Anschlageinrichtung (des ersten Lagerblocks)
35 - Halteplatte
37 - Schraubenkopf
39 - drehbarer Hebel
40 - Lagerkopf
41 - Lagergabel
42 - oberer Schenkel
43 - unterer Schenkel
45 - Scheibe
47 - zweite Anschlageinrichtung (der Scheibe)
49 - vierte Anschlageinrichtung (der Scheibe)
51 - Aussparung der Scheibe
53 - Betätigungselement der mechanische Schalteinrichtung
55 - Sicherungsring
57 - oberes Lagerelement
59 - Lagereinrichtung der Federeinrichtung
60 - Langloch

## Patentansprüche

1. Fritteuse (1) für die Großküche mit einem Gehäuse, in dem eine wannenartige Gareinrichtung (5) zur Aufnahme eines Frittiermediums ausgebildet ist, einer aus mindestens einem Heizelement (9) gebildeten Heizeinrichtung (7), welche in die wannenartige Gareinrichtung (5) in eine Betriebsstellung einschwenkbar und aus dieser herausschwenkbar ist, wobei die Heizeinrichtung (7) an einer drehbaren Schwenkeinrichtung (11) angebracht ist, die in einer Lagereinrichtung (13) gelagert ist,
**dadurch gekennzeichnet,**
**dass** die Lagereinrichtung (13) einen an dem Gehäuse der Fritteuse (1) bzw. an einer Oberseite (3) des Gehäuses der Fritteuse (1) befestigten ersten Lagerblock (15) umfasst, der eine Gewichtskompensationseinrichtung (24) aufweist, die dazu eingerichtet ist, ein vorbestimmtes Gewichtskompensationsmoment als Gegendrehmoment auf die Schwenkeinrichtung (11) in Abhängigkeit der Schwenkstellung der Heizeinrichtung (7) auszuüben, das einem durch die Heizeinrichtung (7) erzeugten Drehmoment entgegenwirkt, wobei das Gegendrehmoment derart ausgelegt ist, dass ab einem vorbestimmten Schwenkwinkel ausgehend von der Betriebsstellung der Heizeinrichtung (7) ein selbständiges Zurückschwenken der Heizeinrichtung (7) in die Betriebsstellung verhindert ist.

2. Fritteuse nach Anspruch 1, **dadurch gekennzeichnet, dass** der vorbestimmte Schwenkwinkel zwischen 15° und 45°, bevorzugt zwischen 20° und 30° beträgt.

3. Fritteuse nach Anspruch 1 oder 2, **dadurch gekennzeichnet, dass** die Gewichtskompensationseinrichtung (24) eine Gegenkrafteinrichtung (25) aufweist, die über eine Verbindungsstange (33) an einem exzentrisch mit einer Scheibe (45) verbundenen drehbaren Hebel (39) angreift, welche ihrerseits mit der Schwenkeinrichtung (11) verbunden ist und durch Drehung der Schwenkeinrichtung (11) in Drehung versetzt wird.

4. Fritteuse nach Anspruch 3, **dadurch gekennzeichnet, dass** die Gegenkrafteinrichtung in Form einer Federeinrichtung (25) ausgebildet ist.

5. Fritteuse nach Anspruch 4, **dadurch gekennzeichnet, dass** die Federeinrichtung (25) als Druckfeder ausgebildet ist, die bevorzugt als Schraubenfeder mit einer geringen Steigung ausgebildet ist.

6. Fritteuse nach Anspruch 4 oder 5, **dadurch gekennzeichnet, dass** die Verbindungsstange (33) sich durch die Federeinrichtung (25) erstreckt und mit einer Halteplatte (35), gegen die die Federeinrichtung (25) drückt, zusammenwirkt.

7. Fritteuse nach Anspruch 6, **dadurch gekennzeichnet, dass** die Verbindungsstange (33) in Form einer Schraube ausgebildet ist, und sich über die Halteplatte (35) hinaus erstreckt und nach der Einstellung der Gegenkraft in ihrer Lage gegen Verdrehen gesichert ist.

8. Fritteuse nach einem der Ansprüche 4 bis 7, **dadurch gekennzeichnet, dass** der erste Lagerblock (15) der Gewichtskompensationseinrichtung (24) eine Bodenplatte (29) aufweist, in der eine Öffnung ausgebildet ist, in der eine Lagereinrichtung (59) der Federeinrichtung (25) mit einer Öffnung für die Verbindungsstange (33) ausgebildet ist, wobei die Federeinrichtung (25) gegen ihre Lagereinrichtung (59) anschlägt.

9. Fritteuse nach einem der Ansprüche 3 bis 8, **dadurch gekennzeichnet, dass** die Scheibe (45) auf einer Wellenbuchse angeordnet ist, die mit der Schwenkeinrichtung (11) verbunden ist, und die Schwenkeinrichtung (11) bei ihrer Drehung die Wellenbuchse in Drehung versetzt und damit die Scheibe (45) dreht.

10. Fritteuse nach einem der Ansprüche 3 bis 9, **dadurch gekennzeichnet, dass** der erste Lagerblock (15) eine Seitenwand (31) mit wenigstens einer ersten Anschlageinrichtung (32) aufweist und die Scheibe (45) eine zweite Anschlageinrichtung (47) aufweist, die in der maximalen Ausschwenkstellung der Schwenkeinrichtung (11) gegen die erste Anschlageinrichtung (32) des ersten Lagerblocks (15) anschlägt.

11. Fritteuse nach einem der Ansprüche 1 bis 10, **dadurch gekennzeichnet, dass** eine Schaltereinrichtung für die Heizeinrichtung (7) vorgesehen ist, die derart von der Gewichtskompensationseinrichtung (24) betätigbar ist, dass zumindest ab dem vorbestimmten Winkel, ab dem ein selbständiges Zurückschwenken der Heizeinrichtung (7) in die Betriebsstellung verhindert wird, die Heizeinrichtung (7) abgeschaltet wird.

12. Fritteuse nach Anspruch 11, **dadurch gekennzeichnet, dass** die Schalteinrichtung für die Heizeinrichtung (7) eine mechanische Schalteinrichtung ist, mit einem Betätigungselement (53), das sich von der Schwenkeinrichtung (11) durch eine Aussparung (51) der drehbaren Scheibe (45) erstreckt und bei Drehung der Scheibe (45) von einem ersten Schaltzustand, in dem die Heizeinrichtung (7) angeschaltet ist, in einen zweiten Schaltzustand, in dem die Heizeinrichtung (7) abgeschaltet ist, bzw. bei umgekehrter Drehung umgekehrt, versetzbar ist.

13. Fritteuse nach einem der Ansprüche 1 bis 12, **dadurch gekennzeichnet, dass** ein zweiter Lagerblock (17) der Lagereinrichtung (13) an der dem ersten Lagerblock (15) entgegengesetzten Seite der Schwenkeinrichtung (11) vorgesehen ist, durch den sich die für die Heizeinrichtung (7) vorgesehenen Anschlussleitungen erstrecken.
